# EUROPEAN PATENT SPECIFICATION

(11) **EP 0 045 070 B1**
(45) Date of publication and mention of the grant of the patent: **02.10.1985**
(21) Application number: 81105863.5
(22) Date of filing: 24.07.1981
(51) Int. Cl.: C08F 214/22, C08G 2/38, C08J 3/24

(54) **Fluorine-containing rubber**
Fluor enthaltendes Harz
Résine contenant du fluore

(30) Priority: 25.07.1980 JP 102768/80
(43) Date of publication of application: 03.02.1982
(73) Proprietor: Daikin Kogyo Co., Ltd., Osaka-shi Osaka-fu (JP)
(72) Inventor: Furukawa, Yasuyoshi, Neyagawa Osaka (JP)
(74) Representative: Hansen, Bernd, Dr. Dipl.-Chem.

## Description

The present invention relates to a fluorine-containing rubber having an excellent alcohol resistance, and a crosslinkable composition comprising the same.

Hitherto, fluorine-containing rubbers, particularly elastic copolymers of vinylidene fluoride and at least one other fluorine-containing ethylenically unsaturated monomer (hereinafter referred to as "vinylidene fluoride rubbers"), are used as industrial materials in various fields, because of their excellent properties in heat resistance, oil resistance, solvent resistance, chemical resistance, etc. However, their alcohol resistance is not satisfactory. When, for instance, a hose made of a vinylidene fluoride rubber containing units of vinylidene fluoride in an amount of not less than 60 mol%, which is presently available on the market, is used for transportation of a fuel comprising an alcohol (e.g. methanol, ethanol), the hose shows considerable swelling. Particularly when the fuel is a mixture of gasoline and an alcohol, this tendency is remarkable, and as the result, the fuel is apt to permeate the hose.

It has now been found that a vinylidene fluoride rubber containing an iodine atom linked to a carbon atom in the polymeric chain and units of vinylidene fluoride in an amount of not more than 55 mol% shows an excellent alcohol resistance. The present invention is based on this finding.

The vinylidene fluoride rubber of the invention comprises a polymeric chain comprising units of vinylidene fluoride and units of at least one other fluorine-containing ethylenically unsaturated monomer (hereinafter referred to as "fluoroolefin"), the content of the units of vinylidene fluoride being not more than 55 mol% on the basis of the entire monomeric units, and at least one iodine atom linked to a carbon atom in the polymeric chain.

In the vinylidene fluoride rubber, it is essential that the vinylidene fluoride unit content is not more than 55 mol% on the basis of the entire monomeric units. Preferably, it may be from 42 to 52 mol%. When the vinylidene fluoride unit content is more than 55 mol%, the swelling with a mixture of gasoline and an alcohol becomes notable. Further, the vinylidene fluoride rubber has usually an iodine content of 0.01 to 5% by weight.

The vinylidene fluoride rubber can be produced by polymerizing vinylidene fluoride and at least one fluoroolefin in the presence of a radical producing source and an iodinated compound.

The other fluoroolefin may be, for instance, tetrafluoroethylene, trifluorochloroethylene, trifluoroethylene, hexafluoropropylerie, pentafluoropropylene, perfluoro(methyl vinyl ether), perfluoro(ethyl vinyl ether), perfluoro(propyl vinyl ether) or the like. When desired, any ethylenically unsaturated monomer containing no fluorine atom may be used additionally as a monomeric component to be copolymerized with vinylidene fluoride and the other fluoroolefin so as to modify any physical property of the resulting vinylidene fluoride rubber. However, its amount should be controlled so as not to deteriorate the desired alcohol resistance. Examples of such monomer are ethylene, propylene, trichloroethylene, etc.

The molar proportion of the vinylidene fluoride and the other fluoroolefin may be usually from about 40 : 60 to 55 : 45. Depending upon the reaction conditions, however this molar proportion may be appropriately changed so as to afford the vinylidene fluoride rubber wherein the vinylidene fluoride unit content is not more than 55 mol%, preferably from 42 to 52 mol%.

The iodinated compound is representable by the formula: Rlₓ wherein R is a saturated or unsaturated fluorohydrocarbon or chlorofluorohydrocarbon residue having 1 to 8 carbon atoms and x is an integer of 1 or 2 corresponding to the bonding valency of the residue R. It contains 1 or 2 of linked iodine atoms and is stable in such a degree that undesirable side reaction does not occur under the polymerization conditions. R is a saturated or unsaturated fluorohydrocarbon or chlorofluorohydrocarbon residue (which may include a functional group such as-0- -S- -N=,-COOH,-S03H and-P0₃H) usually having 1 to 8 carbon atoms. It is preferable that the carbon atom adjacent to the iodine atom bears at least one fluorine atom or perfluorohydrocarbon residue. Specific examples of the iodinated compound are monoiodoperfluoro- methane, monoiodoperfluoroethane, monoiodoperfluoropropane, monoiodoperfluorobutane (e.g. 2-iodoperfluorobutane, 1-iodoperfluoro(1,1-dimethylethane)), monoiodoperfluoropentane (e.g. 1-iodoperfluoro(4-methylbutane)), 1-iodoperfluoro-n-octane, monoiodoperfluorocyclobutane, 2-iodoperfiuoro(1-cyclobutyl)ethane, monoiodoperfluorocyclohexane, monoiodotrifluorocyclobutane, monoiododifluoro- methane, monoiodomonoflupromethane, 2-iodo-1-hydroperfluoroethane, 3-iodo-1-hydroperfluoro- propane, monoiodomonochlorodifluoromethane, monoiododichloromonofluoromethane, 2-iodo-1,2-dichloro-1,1,2-trifluoroethane, 4-iodo-1,2-dichloroperfluorobutane, 6-iodo-1,2-dichloroperfluorohexane, 4-iodo-1,2,4-trichloroperfluorobutane, 1-iodo-2,2-dihydroperfluoropropane, 1-iodo-2-hydroper- fluoropropane, monoiodotrifluoroethylene, 3-iodo-perfluoropropene-1, 4-iodoperfluoropentene-1, 4-iodo-5-chloroperfluoropentene-1, 2-iodoperfluoro(1-cyclobutenylethane), 1,3-diiodoperfluoro-n-propane, 1,4- diiodoperfluoro-n-butane, 1,3-diiodo-2-chloroperfluoro-n-propane, 1,5-diiodo-2,4-dichloroperfluoro-n-pentane, 1,7-diiodoperfluoro-n-octane, 1,2-di(iododifluoromethyl)perfluorocyclobutane, 2-iodo-1,1,1-trifluoroethane, 1-iodo-1-hydroperfluoro(2-methylethane), 2-iodo-2,2-dichloro-1,1,1-trifluoroethane, 2-iodo-2-chloro-1,1,1-trifluoroethane, 2-iodoperfluoroethyl perfluorovinyl ether, 2-iodoperfluoroethyl perfluoroisopropyl ether, 3-iodo-2-chloroperfluorobutyl perfluoromethyl thioether, 3-iodo-4-chloroper- ffluorobutyric acid, etc.

These iodinated compounds may be prepared by conventional methods. For example, 2-iodoperfluoropropane can be obtained by the reaction of hexafluoropropane with iodine in the presence of potassium fluoride; 1,5-diiodo-2,4-dichloroperfluoro-n-pentane can be prepared by the reaction of silver salt of 3,5-dichloroperfluoro-1,7-heptanedicarboxylic acid with iodine; and 4-iodo-5-chloroperfluoro-1-pentene can be obtained by the reaction of perfluoro-1,4-pentadiene with iodine chloride.

The carbon-iodine (C-I) linkage of the iodinated compound is a relatively weak one and is readily cleaved radically in the presence of a radical producing source. The high reactivity of the thus produced radical causes the propagation reaction of the monomer(s), and then the iodine atom is taken out from the iodinated compound to stop the reaction, whereby the polymer in which iodine is linked to the carbon atom at the terminal of the molecule can be obtained. The thus formed linkage of the terminal of the polymer with iodine is again cleaved radically with ease in the presence of a radical producing source to produce a radical having a similar reactivity. Therefore, by changing the kind of the monomer(s) successively and repeating the polymerization one more or several times in the presence of the said polymer, the propagation reaction of the monomer(s) is caused at each polymerization step to afford a segmented copolymer in which two kinds or more of segments corresponding to the kind of the monomer(s) are chemically linked and linked iodine is present.

As the radical producing source, light or heat may be preferably employed. In case of light, infrared to ultraviolet rays, particularly not containing chemical ultraviolet rays, may be used. Chemical ultraviolet rays may sometimes produce radicals also from linkages other than the C-I linkage and is thus not necessarily ideal. In case of iniating the reaction with heat alone, a temperature of at least 100°C or higher, preferably 200°C or higher, is necessitated. Ionizing radiation may be also utilizable, but it produces radical indiscriminately in essence and is thus undesirable. Further, appropriate radical initators such as inorganic or organic peroxides, azo compounds, organometallic compounds and metals may be also employed depending on the mode of the polymerization. Examples of the preferred radical initiators are persulfates, hydrogen peroxide, (R'CO)₂0₂, R'OOR', (R')₃COOC(O)OC(R')₃, N₂F₂, R'N=NR', HgR'₂, Li, K, Na, Mg, Zn, Hg, Al, etc., R' being a polyfluoroalkyl group.

The polymerization temperature may be optionally selected from such range that the radical reaction takes place but thermal decomposition of the produced polymer chain does not occur. Usually, a temperature of -20 to 150°C is adopted. In case of using heat as the radical producing source, a higher temperature, sometimes of about 250°C is necessitated.

As the polymerization pressure, there is no particular limitation. In usual, a pressure equal to or lower than the autogenous pressure of the monomers participating in the polymerization may be adopted.

The polymerization may be accomplished by various modes such as solution polymerization or emulsion polymerization.

As the medium for solution polymerization, the one in which chain transfer is hardly caused is preferable. For example, the following solvents may be favourably employed:

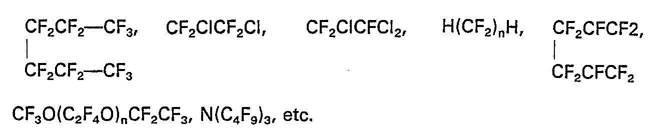

In case of the emulsion polymerization, the use of an emulsifier is usually desirable. When the produced polymer has a surface active effect, for instance, in case of containing a hydrophilic group such as-COOM,-OH or-S0₃M (M being hydrogen, metal or any other cation), the use of an emulsifier is not necessarily required. As the emulsifier, a fluorine-containing one such as a salt of fluorine-containing carboxylic acid or a salt of fluorine-containing sulfonic acid is favorably employed. The amount of the emulsifier to be used is usually 5% by weight or less to the amount of water. A chain transfer agent may be also employed but desirable result is not obtained in general.

Further details for production of the vinylidene fluoride rubber may be referred to U.S. patent 4,243,770.

The vinylidene fluoride rubber of this invention is crosslinkable in the presence of a crosslinking agent, and this invention can provide a crosslinkable composition which comprises the vinylidene fluoride rubber and a crosslinking agent. On crosslinking, such composition affords a crosslinked rubber material which is excellent in alcohol resistance.

As the crosslinking agent, the use of a polyhydroxy compound is the most favourable. Examples of the polyhydroxy compound are 2,2-bis(4-hydroxyphenyl)propane ("Bisphenol A"), 2,2-bis(4-hydroxyphenyl)perfluoropropane ("Bisphenol AF"), resorcinol, 1,3,5-trihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane ("Bisphenol B"), 4,4-bis-(4-hydroxyphenyl)valeric acid, 2,2-bis(4-hydroxyphenyl)tetrafluorodichloro- propane, 4,4'-dihydroxydiphenylsulfone, 4,4'-dihydroxydiphenyiketone, tri(4-hydroxyphenyi)methane, 3, 3',5,5'-tetrachlorobisphenol A, 3,3',5,5'-tetrabromobisphenot A, CF₂(CF₂CH₂0H)₂, CF₂(CFHCF₂CH₂OH)₂, (CF₂)₃(CF₂CH₂OH)₂, (CF₂)₃(CFHCF₂CH₂OH)₂, (CF₂)₅(CF₂CH₂OH)₂, (CF₂)ₛ(CFHCF₂CH₂0H)₂, etc.

In addition, the crosslinkable composition may contain any nitrogen or phosphorus-containing organic compound as an accelerator. Examples of such nitrogen or phosphorus-containing organic compound areas follows:
(a) Compounds represented by either one of the formulae: 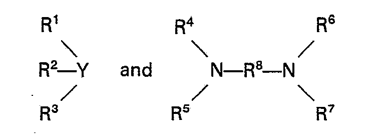 (wherein Y is N or P; R¹, R² and R³ are each an alkyl group having 1 to 20 carbon atoms, or one of them may be a cycloalkyl group having 3 to 20 carbon atoms, or two of them may be linked together to form a nitrogen-containing ring; R⁴, R⁵, R⁶ and R⁷ are each an alkyl group having 1 to 6 carbon atoms, ortwo ofthem, i.e. R⁴ and R⁶ and/or R⁵ and R⁷ may be linked to form a ring; R⁸ is an alkylene group having 1 to 21 carbon atoms), and their salts with organic or inorganic acids (in case of the salts, the symbol Y representing N);
(b) Compounds represented by either one of the formulae: 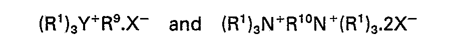 (where Y and R¹ are each as defined above, R⁹ is an alkyl group having 1 to 20 carbon atoms or an aralkyl group having 7 to 20 carbon atoms, R¹⁰ is an alkylene group having 1 to 21 carbon atoms or a phenylene- dialkylene group having 8 to 12 carbon atoms and X is an anion such as halide, hydroxylate, alkoxylate, carboxylate, phenoxide, sulfonate, sulfate, sulfite or carbonate);
(c) Compounds represented by the formula: 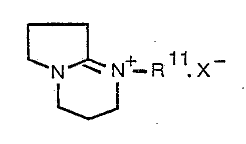 (wherein R¹¹is an alkyl group having 1 to 24 carbon atoms or an aralkyl group having 7 to 20 carbon atoms and X is as defined above);
(d) Compounds represented by the formula: 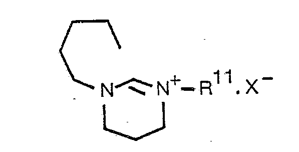 (wherein R" and X are each as defined above);
(e) Compounds represented by the formula: 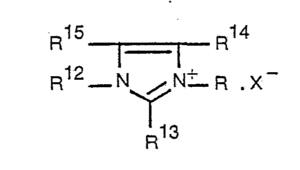 (wherein R¹² is an alkyl group having 1 to 20 carbon atoms, a cycloalkyl group having 3 to 20 carbon atoms or an aralkyl group having 7 to 20 carbon atoms, R¹³ is a hydrogen atom, an alkyl group having 1 to 12 carbon atoms, a cycloalkyl group having 3 to 20 carbon atoms, an aryl group having 6 to 12 carbon atoms, an aralkyl group having 7 to 15 carbon atoms, an ether group having 1 to 12 carbon atoms, a hydroxyl group, a carbonyl group, an alkoxycarbonyl group, an acyl group or a heterocyclic group containing at least one nitrogen and/or sulfur atom(s), R¹⁴ and R¹⁵ are each a hydrogen atom or an alkyl group having 1 to 4 carbon atoms and R⁹ and X are each as defined above);
(f) Compounds represented by either one of the formulae: 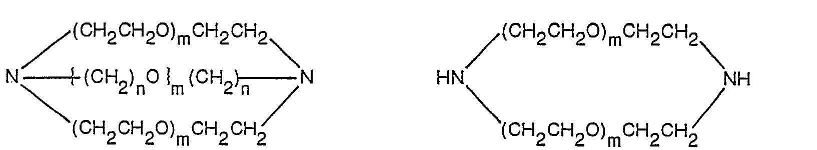 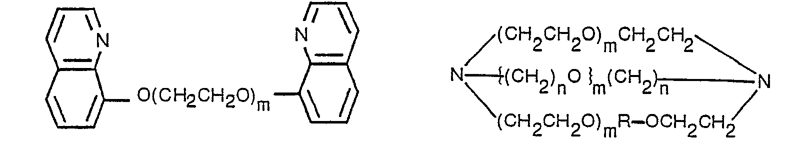 (wherein m and n are each an integer of 1 to 5 and R is a substituent such as

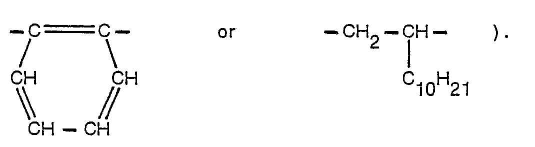

Typical examples of these compounds are described in detail in Japanese Patent Publication Nos. 19638/1973, 55230/1973, 55231/1973, 32942/1974.

As the said salts of the compounds (a), there may be exemplified salts with inorganic acids such as hydrochloric acid, nitric acid, phosphoric acid and sulfuric acid, and salts with organic acids such as acetic acid, propionic acid, oxalic acid and phenols.

Among the above materials, those in a solid form may be as such added to the vinylidene fluoride rubber, and those in a liquid form are preferably admixed with a suitable dispersing carrier (e.g. an adsorbing agent) and then incorporated into the vinylidene fluoride rubber.

The composition of the invention is usually composed of 100 parts by weight of the vinylidene fluoride rubber, 0.5 to 10 parts by weight (preferably 0.5 to 5 parts by weight) of the polyhydroxy compound as the crosslinking agent and 0.1 to 10 parts by weight (preferably 0.2 to 2 parts by weight) of the accelerator.

In place of the polyhydroxy compound, any other material conventionally employed for crosslinking of fluorine-containing rubbers may be also used as a crosslinking agent of the vinylidene fluoride rubber. Examples of such material are organic peroxides (e.g. 1,1-bis(t-butylperoxy)-3,5,5-trimethylcyclohexane, 2,5-dimethylhexane-2,5-dihydroxyperoxide, di-t-butylperoxide, t-butylcumylperoxide, dicumylperoxide, a,a'-bis(t-butylperoxy)-p-diisopropylbenzene, 2,5-dimethyl-2,5-di(t-butylperoxy)hexane, 2,5-dimethyl-2,5-di(t-butylperoxy)hexene-3, benzoylperoxide, t-butylperoxybenzene, 2,5-dimethyl-2,5-di(benzoyl- peroxy)hexane, t-butylperoxymaleic acid, t-butylperoxyisopropyl carbonate), polyamines (e.g. ethylenediamine carbamate, hexamethylenediamine carbamate, 4,4'-diaminocyclohexylmethane carbamate, N,N'- dicinnamylidene-1,6-hexamethylenediamine). When the organic peroxide is used as the crosslinking agent, there may be preferably employed a crosslinking aid, of which examples are polyfunctional compounds such as triallyl cyanurate, triallyl isocyanurate, triacrylformal, triallyl trimellitate, N,N '-m-phenylenebismaleimide, dipropargyl terephthalate, diallyl phthalate, tetraallyl terephthalamide and polybutadiene.

In addition to the above components, the crosslinkable composition may contain optionally other additives in appropriate amounts, Examples of such optional additives are oxides and hydroxides of divalent metals (e.g. Mg, Ca, Zn, Ba, Pb). The composition may also contain fillers such as carbon black, silica, clay, diatomaceous earth and talc, reinforcing agents, plasticizers, pigments, etc.

The composition of the invention may be prepared by kneading the essential components with or without the optional components by a conventional procedure, e.g. using a roll mill, to make a uniform mixture. Crosslinking of the composition may be also effected by a conventional procedure, for instance, by keeping in a mold at a temperature of 120 to 200°C under pressure for 5 to 30 minutes and then maintaining in a furnace at a temperature of 200 to 260°C for 16 to 24 hours.

As stated above, the vinylidene fluoride rubber of the invention is excellent in alcohol resistance, and therefore useful as a material in production of a hose for transportation of a fuel comprising an alcohol. The crosslinked rubber obtained from such vinylidene fluoride rubber is also excellent in alcohol resistance. Particularly, the crosslinked rubber obtained by crosslinking of the vinylidene fluoride rubber with a polyhydroxy compound as the crosslinking agent and a nitrogen or phosphorus-containing organic compound as the crosslinking aid shows a good adhesion onto an epichlorhydrin rubber. Thus, it may be used for construction of the inner layer of a composite hose having thereon an epichlorohydrin rubber layer as the outer layer, optionally with a braided layer between the inner layer and the outer layer. For instance, the crosslinkable composition of the invention and an epichlorhydrin rubber are molded by a conventional coextrusion method into a layered tube having an inner layer of the crosslinkable composition and an outer layer of the epichlorhydrin rubber and subjecting the resultant tube to a crosslinking in a vulcanization can under pressure. The thus prepared composition tube is so firmly bonded each other as being tolerable to the use for a long period of time. Advantageously, it is improved in low temperature resistance in addition to alcohol resistance.

Practical and presently preferred embodiments of the invention are illustratively shown in the following Examples wherein % and part(s) are by weight unless otherwise indicated.

### Example 1

In a 2530 ml volume reactor, pure water (1230 ml) and ammonium perfluorooctanoate (2.46 kg) were charged, and the inner atmosphere was replaced by nitrogen gas. A gaseous mixture of vinylidene fluoride and hexafluoropropylene in a molar ratio of 12 : 88 was pressurized into the reactor to make a pressure of 14.7 bar (14 kg/cm²G) at 80°C. An aqueous solution of ammonium persulfate (concentration, 2 x 10-³ g/ml) (8 ml) was introduced into the reaction system while stirring, whereby polymerization was initiated. When the pressure was lowered to 12.8 bar (12 kg/cm²G), I(CF₂)₄1 (1.28 g) was added thereto, whereby the reaction rate was somewhat decreased. A gaseous mixture of vinylidene fluoride and hexafluoropropylene in a molar ratio of 53 : 47 was introduced into the reactor to make a pressure of 14.7 bar (14 kg/cm²G) and then continuously supplied therein to make the pressure constant. An aqueous solution of ammonium persulfate (concentration, 2 x 10-³ g/ml) (4 ml) was added to the reaction system in every 3 hours. After 56 hours, the total amount of the monomers consumed reached 400 g. Then the gas in the reactor was released with lowering of the temperature. The product taken out from the reactor was a white aqueous dispersion. To the dispersion, a 1% aqueous solution of potassium alum was added, and the precipitate was collected, washed with water and dried to give a colorless, transparent rubber. When determined in a solution in tetrahydrofuran, it showed an intrinsic viscosity of [r_{l]}=0.72 (35°C, dl/g). By the radiometric analysis, the iodine content was confirmed to be 0.17% by weight. The vinylidene fluoride unit content determined by the NMR analysis was 54 mol%.

### Example 2

In the same manner as in Example 1 but using a gaseous mixture of vinylidene fluoride, hexafluoropropylene and tetrafluoroethylene in a molar ratio of 23 : 69 : 8 as the initial monomer mixture and a gaseous mixture of vinylidene fluoride, hexafluoropropylene and tetrafluoroethylene in a molar ratio of 50 : 30 : 20 as the monomer mixture to be subsequently supplied, the reaction was carried out for 15 hours, whereby a rubber was obtianed. [q]=0.48. Vinylidene fluoride unit content, 50.5 mol%. Iodine content, 0.18% by weight.

In the same manner as above but using a gaseous mixture of vinylidene fluoride, hexafluoropropylene and tetrafluoroethylene in an appropriate molar ratio with a suitable reaction time, there was obtained a vinylidene fluoride rubber having a vinylidene fluoride unit content of 45 mol% and an iodine content of 0.19% by weight.

### Examples 3-4 and Comparative Examples 1-2

Materials as shown in Table 1 were mixed together and kneaded well by the aid of a rubber roll. The resultant mixture was allowed to stand overnight for aging and then kneaded by the aid of a rubber roll. The resulting mixture was subjected to press vulcanization and oven vulcanization under the conditions as shown in Table 1 to make a sheet. The methanol resistance and the gasoline permeability of the sheet were measured by the following procedures, and the results are shown in Table 1:
Methanol resistance:-
   The sheet was immersed in methanol or gasoline comprising 20% by volume of methanol at 40°C for 70 hours, and the volume increase (%) was determined.
Gasoline permeability:-
   Using gasoline comprising 20% by volume of methanol, the permeability of the sheet (g/m².day) was determined at 40°C according to the cup method.

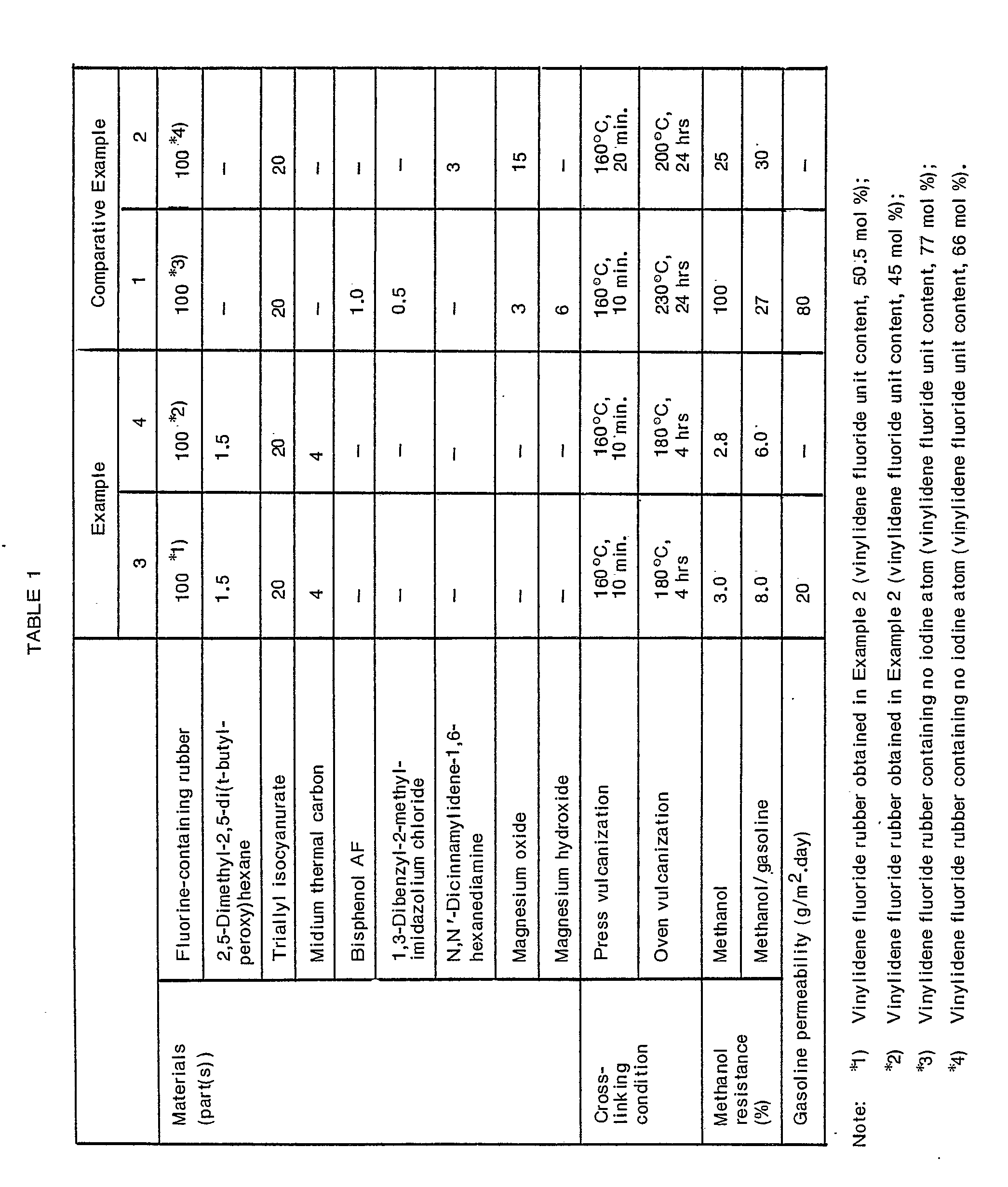

From the above results, it is understood that the vinylidene fluoride rubber of the invention (i.e. having a vinylidene fluoride unit content of not more than 55 mol%) shows better alcohol resistance and higher prevention of gasoline permeation than the vinylidene fluoride rubber having a vinylidene fluoride unit content of more than 55 mol%.

### Examples 5-6

In the same manner as in Example 3, materials as shown in Table 2 were mixed together by the aid of a rubber roll to make a crosslinkable composition comprising the vinylidene fluoride rubber. This composition and a crosslinkable composition comprising an epichlorhydrin rubber, an accelerator and Pb₃0₄ were separately extruded to make sheets of 2 mm in thickness. These sheets were layered and subjected to press vulcanization at 160°C for 30 minutes to give a layered product of the vinylidene fluoride rubber and the epichlorhydrin rubber. The bonding strength between the vinylidene fluoride rubber and the epichlorhydrin rubber of the layered product was measured by the peeling off test at an angle of 180° using a pulling machine. Further, the layered product was subjected to methanol resistance test in the same manner as in Example 3. The results are shown in Table 2.

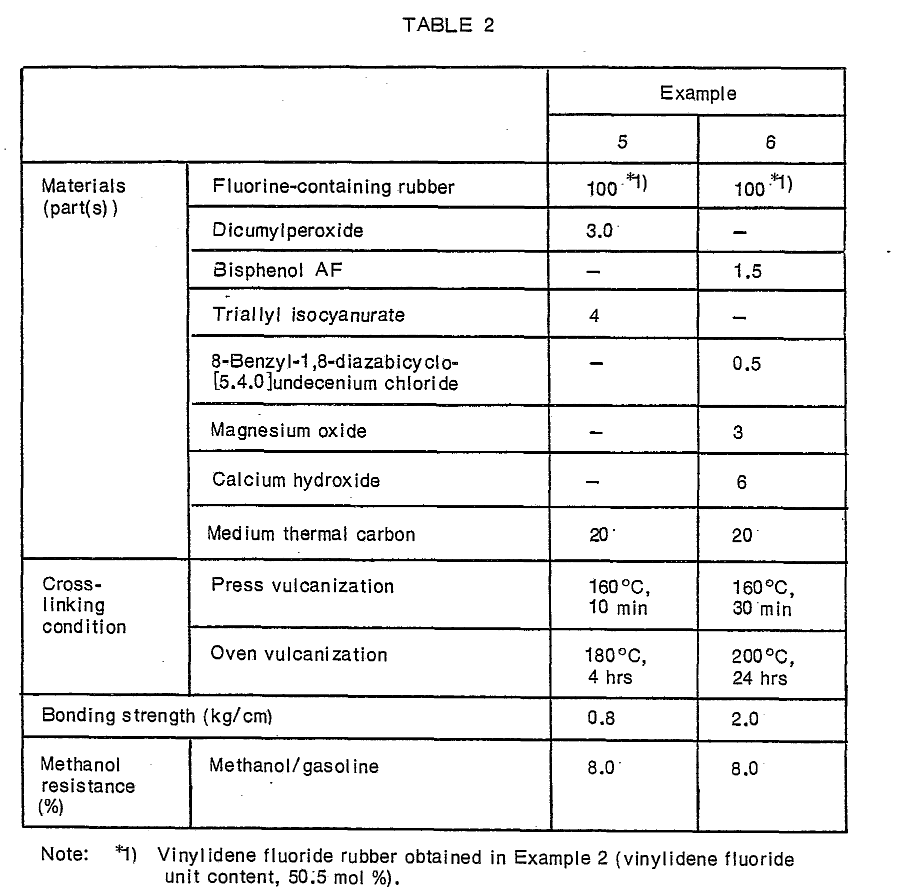

## Claims

1. A fluorine-containing rubber having an excellent alcohol resistance which comprises a polymeric chain comprising units of vinylidene fluoride and units of at least one other fluorine-containing ethylenically unsaturated monomer, the content of the vinylidene fluoride units being not more than 55 mol % on the basis of the entire monomeric units, and at least one iodine atom linked to a carbon atom in the polymeric chain.

2. The fluorine-containing rubber according to claim 1, wherein the vinylidene fluoride unit content is from 42 to 52 mol %.

3. The fluorine-containing rubber according to claim 1, wherein the iodine atom content is from 0.01 to 5% by weight.

4. A crosslinkable rubber composition which comprises the fluorine-containing rubber according to claim 1 and a crosslinking agent.

5. The crosslinkable rubber composition according to claim 4, wherein the crosslinking agent is a polyhydroxycompound.

6. The crosslinkable rubber composition according to claim 5, which further comprises a nitrogen or phosphorus-containing organic compound as the accelerator.

7. The crosslinkable rubber composition according to claim 5, wherein the content of the polyhydroxy compound is from 0.5 to 5 parts by weight to 100 parts by weight of the fluorine-containing rubber.

8. The crosslinkable rubber composition according to claim 6, wherein the content of the nitrogen or phosphorus-containing organic compound is from 0.2 to 2 parts by weight to 100 parts by weight of the fluorine-containing rubber.

## Patentansprüche

1. Fluorhaltiger Kautschuk mit ausgezeichneter Beständigkeit gegen Alkohol, mit einer polymeren Kette, die Vinylidenfluorid-Einheiten und Einheiten wenigstens eines anderen, Fluor enthaltenden, ethylenisch ungesättigten Monomers, wobei der Gehalt an Vinylidenfluorid-Einheiten nicht mehr als 55 Mol-%, bezogen auf die monomeren Einheiten insgesamt, beträgt, sowie wenigstens ein lod-Atom gebunden an ein Kohlenstoff-Atom in der polymeren Kette enthält.

2. Fluorhaltiger Kautschuk nach Anspruch 1, dadurch gekennzeichnet, daß der Gehalt an Vinylidenfluorid-Einheiten 42 bis 52 Mol-% beträgt.

3. Fluorhaitiger Kautschuk nach Anspruch 1, dadurch gekennzeichnet, daß der Gehalt an lod-Atomen 0,01 bis 5 Gew.-% beträgt.

4. Vernetzbare Kautschuk-Zusammensetzung, enthaltend den fluorhaltigen Kautschuk nach Anspruch 1 und ein Vernetzungsmittel.

5. Vernetzbare Kautschuk-Zusammensetzung nach Anspruch 4, dadurch gekennzeichnet, daß das Vernetzungsmittel eine Polyhydroxy-Verbindung ist.

6. Vernetzbare Kautschuk-Zusammensetzung nach Anspruch 5, dadurch gekennzeichnet, daß_{'} sie weiterhin eine stickstoff- oder phosphorhaltige organische Verbindung als Beschleuniger enthält.

7. Vernetzbare Kautschuk-Zusammensetzung nach Anspruch 5, dadurch gekennzeichnet, daß der Gehalt an der Polyhydroxy-Verbindung 0,5 bis 5 Gew.-Teile auf 100 Gew.-Teile des fluorhaltigen Kautschuks beträgt.

8. Vernetzbare Kautschuk-Zusammensetzung nach Anspruch 6, dadurch gekennzeichnet, daß der Gehalt an der stickstoff- oder phosphorhaltigen, organischen Verbindung 0,2 bis 2 Gew.-Teile auf 100 Gew.-Teile des fluorhaltigen Kautschuks beträgt.

## Revendications

1. Caoutchouc fluoré ayant une excellente résistance aux alcools, caractérisé en ce qu'il comprend une chaîne polymère comprenant des motifs de fluorure de vinylidène et des motifs d'au moins un autre monomère éthyfénique fluoré, la teneur en motifs de fluorure de vinylidène étant de pas plus de 55 mol-% par rapport au total des motifs monomères, et au moins un atome d'iode lié à un atome de carbone dans la chaîne polymère.

2. Caoutchouc fluoré selon la revendication 1, caractérisé en ce que la teneur en motifs de fluorure de vinylidène est de 42 à 52 mol-%.

3. Caoutchouc fluoré selon la revendication 1, caractérisé en ce que la teneur en atomes d'iode est de 0,01 à 5% en poids.

4. Composition de caoutchouc réticulable, caractérisée en ce qu'elle comprend le caoutchouc fluoré selon la revendication 1 et un agent réticulant.

5. Composition de caoutchouc réticulable selon la revendication 4, caractérisée en ce que l'agent réticulant est un composé polyhydroxylé.

6. Composition de caoutchouc réticulable selon la revendication 5, caractérisée en ce qu'elle comprend en outre un composé organique azoté ou phosphoré comme accélérateur.

7. Composition de caoutchouc réticulable selon la revendication 5, caractérisée en ce que la teneur en composé polyhydroxylé est de 0,5 à parties en poids pour 100 parties en poids du caoutchouc fluoré.

8. Composition de caoutchouc réticulable selon la revendication 6, caractérisée en ce que la teneur en composé organique azoté ou phosphoré est de 0,2 à 2 parties en poids pour 100 parties en poids du caoutchouc fluoré.
